# NEUE EUROPÄISCHE PATENTSCHRIFT

(11) **EP 2 923 837 B2**
(45) Veröffentlichungstag und Bekanntmachung des Hinweises auf die Entscheidung über den Einspruch: **30.10.2019**
(45) Hinweis auf die Patenterteilung: 12.10.2016
(21) Anmeldenummer: 15157357.3
(22) Anmeldetag: 03.03.2015
(51) Int. Cl.: B41F 33/16, B41F 13/004, H02P 29/00, H02P 5/74, B41F 33/00

(54) **Verfahren zu Reduzierung der Spitzenlast in einer Druckmaschine**
METHOD TO DECREASE PEAK LOAD IN A PRINTING MACHINE
PROCÉDÉ DE RÉDUCTION DE LA CHARGE DE POINTE DANS UNE PRESSE

(30) Priorität: 27.03.2014 DE 102014004362
(43) Veröffentlichungstag der Anmeldung: 30.09.2015
(73) Patentinhaber: Heidelberger Druckmaschinen AG, 69115 Heidelberg (DE)
(72) Erfinder: Krüger, Michael, 68535 Edingen-Neckarhausen (DE); Strunk, Detlef, 69120 Heidelberg (DE); Lossner, Niels, 69207 Sandhausen (DE)

(56) Entgegenhaltungen:
- EP-A1- 2 127 875
- EP-A2- 2 072 257
- EP-A2- 2 130 676
- DE-A1- 10 318 541
- DE-A1-102008 001 966
- DE-A1-102008 045 427

## Beschreibung

Die vorliegende Erfindung betrifft ein Verfahren zur Steuerung von elektrischen Antrieben in Maschinen mit einem Steuerungsrechner und einer Bedieneinrichtung.

Große elektrisch angetriebene Maschinen wie Druckmaschinen stellen für die Stromnetze grundsätzlich eine hohe Belastung dar, da sie eine hohe und über die Zeit variierende Leistungsaufnahme haben. Um diese Belastung der Stromnetze, welche mit entsprechend höheren Stromkosten für die Betreiber derartiger Maschinen verbunden ist, zu minimieren, wurden bereits in der Vergangenheit Ansätze verfolgt, zumindest die Lastspitzen abzusenken.

Ein derartiger Ansatz geht aus der Offenlegungsschrift DE 10 2007 026 012 A1 hervor. Darin wird eine Vorrichtung zur Steuerung von elektrischen Antrieben in Maschinen vorgeschlagen, welche eine Steuerungselektronik aufweist, die die von einem elektrischen Antrieb benötigte elektrische Energie zum Betrieb der Maschine in Abhängigkeit von sogenannten Bewegungsprofilen des elektrischen Antriebs vorausberechnet. Unter den Bewegungsprofilen werden dabei durch den elektrischen Antrieb bewirkte Antriebsvorgänge in der Maschine verstanden, welche unterschiedliche Leistungsanforderungen erzeugen. In der Offenlegungsschrift wird die Vorgehensweise anhand einer Druckmaschine geschildert. Dabei ist vorgesehen, dass die in der nahen Zukunft liegenden Betriebsbedingungen des elektrischen Antriebs aufgrund zu erwartender Anforderungen berechnet werden. Auf diese Art und Weise ist bekannt, dass zu einem bestimmten Zeitpunkt eine bestimmte Spitzenleistung erforderlich ist. Um die Leistungsaufnahme aus dem Stromnetz zu vergleichmäßigen wird vorgeschlagen, zum Zeitpunkt mit geringerer Leistungsanforderung eine über der Leistungsanforderung liegende elektrische Energie aus dem Stromnetz zu entnehmen, diese zwischen zu speichern und dann bei einer Spitzenlastanforderung dem Stromspeicher wieder zu entnehmen. Auf diese Art und Weise wird die Leistungsaufnahme aus dem Stromnetz auf einen durchschnittliche Leistungsaufnahme begrenzt, welche deutlich unter der maximalen Spitzenbelastung durch die Maschine liegt. Auch die Stromversorgung der Maschine selbst, welche die Wechselspannung des Stromnetzes in eine Gleichspannung zur Versorgung der Antriebe in der Maschine umwandelt, kann entsprechend kleiner auf die ursprünglich benötigte Leistung ausgelegt werden, indem die bei Spitzenleistung benötigte zusätzliche Energie in einem entsprechenden Stromspeicher der Maschine im Gleichspannungszwischenkreis im Voraus abgespeichert wird.

Ein anderer Ansatz zur Verminderung der Leistungsaufnahme einer Druckmaschine geht aus der Offenlegungsschrift DE 10 2007 062 287 A1 hervor. Hierin wird ein Verfahren zum Herstellen eines Druckprodukts beschrieben, bei dem der Verbrauch von Energie bzw. die Aufnahme von Leistung der für die Herstellung des Druckprodukts benötigten Aggregate der Druckvorstufe und der Druckmaschine und der Weiterverarbeitungsmaschine erfasst wird, wobei zumindest eines der beteiligten Aggregate so betrieben wird, dass der Energieverbrauch bzw. die Leistungsaufnahme bei der Herstellung des Druckprodukts reduziert wird. Dabei ist vorgesehen, dass die Leistungsaufnahme so weit reduziert wird, dass eine zur Herstellung des Druckprodukts maximal zulässige Produktionszeit nicht überschritten wird. Außerdem ist es zusätzlich oder alternativ möglich, Aggregate der Druckmaschine oder der Weiterverarbeitungsmaschine, die zum Abarbeiten eines aktuellen Druckprodukts nicht benötigt werden, stillzusetzen oder in einen Standby-Modus zu überführen.

Aus der europäischen Patentanmeldung EP 2 072 257 A2 ist ein Verfahren zum Herstellen eines Druckprodukts in einer Druckerei bekannt, wobei ein unbedruckter Bedruckstoff auf Grundlage von in einer Druckvorstufe bereitgestellten Bilddaten in einer Druckmaschine bedruckt und nach dem Bedrucken in mindestens einer Weiterverarbeitungsmaschine zum auslieferungsfähigen Druckprodukt weiterverarbeitet wird. Kern der Anmeldung ist die Erfassung der Leistungsaufnahme der an der Herstellung des Druckprodukts beteiligter Aggregate der Druckvorstufe und/oder der Druckmaschine und/oder der oder jeder Weiterverarbeitungsmaschine erfasst, wobei zumindest ein Aggregat auf Grundlage des erfassten Energieverbrauchs bzw. der erfassten Leistungsaufnahme derart betreiben wird, dass sich der Energieverbrauch bzw. die Leistungsaufnahme bei der Herstellung des Druckprodukts reduziert.

Die deutsche Patentanmeldung DE 10 2008 045 427 A1 dagegen zeigt ein Verfahren zur Steuerung von elektrischen Verbrauchern in einer Druckerei, wobei die steuerbaren Verbraucher Bedruckstoffe verarbeitenden Maschinen, den Maschinen zugeordneten peripheren Einrichtungen und zentralen Einrichtungen der Druckerei zugeordnet sind.

Aus der europäischen Patentanmeldung EP 2 127 875 A1 ist ein Verfahren zum Herstellen eines Druckprodukts in einer Druckmaschine bekannt, wobei die Leistungsaufnahme der Druckmaschine oder deren Aggregate derart durch Verteilung überschüssiger Energieströme betrieben wird, dass sich der Energieverbrauch bzw. die Leistungsaufnahme bei der Herstellung des Druckprodukts reduziert.

Die deutsche Patentanmeldung DE 103 18 541 A1 wiederum offenbart ein Verfahren zur Messung, Dokumentation und Überwachung von elektrischen Netz- und Leistungsparametern bei der Druckmaschineninbetriebnahme, im Druckbetrieb und bei der Fernwartung an Druckmaschinen mit Maschinen- und Auftragsdatenmanagement. Dabei wird wenigstens ein Multifunktionsmodul in die Maschinensteuerung integriert und Schnittstellen zu einem Maschinen- und Auftragsdatenmanagementsystem mit den Schritten: Messung und Dokumentation von elektrischen Leistungsparametern, sowie Oberwellenanalyse bei der Inbetriebnahme der Druckmaschine, kontinuierliche Messung und Dokumentation der elektrischen Leistungsparameter während des Druckbetriebes, Ermittlung und Speicherung des auf die zu bearbeitenden Druckaufträge bezogenen Energieverbrauches innerhalb des Maschinen- und Auftragsdatenmanagementsystems und Übergabe der Energieverbrauchswerte für die Nachkalkulation an das übergeordnete Produktionsplanungssystem, Überwachung der elektrischen Netz- und Leistungsparameter an der Druckmaschine während der Fernwartung der Druckmaschine.

Es ist Aufgabe der vorliegenden Erfindung, ein Verfahren zur Steuerung von elektrischen Antrieben in Maschinen mit einem Steuerungsrechner und einer Bedieneinrichtung zu schaffen, welches den Betrieb einer Maschine mit einer reduzierten Leistungsaufnahme unter den Bedingungen des anstehenden Auftrags sinnvoll anpasst.

Diese Aufgabe wird erfindungsgemäß durch Patentanspruch 1 gelöst. Vorteilhafte Ausgestaltungen der Erfindung ergeben sich aus den Unteransprüchen und den Zeichnungen sowie der Beschreibung. Das vorliegende erfindungsgemäße Verfahren kann grundsätzlich bei sämtlichen elektrisch angetriebenen Maschinen eingesetzt werden und eignet sich bevorzugt zur Anwendung in Bedruckstoffe verarbeitenden Maschinen, welche häufig eine hohe maximale elektrische Anschlussleistung über 100 KW aufweisen. Da das vorliegende Verfahren im Wesentlichen in Form einer Steuerungssoftware verwirklicht wird, kann dieses Verfahren auch bei bestehenden Maschinen nachgerüstet werden. Gemäß der vorliegenden Erfindung ist vorgesehen, dass über eine Bedieneinrichtung der Maschine, welche z. B. in Form eines Touchscreens ausgeführt sein kann, vom Bediener der Maschine eine Vorgabe zur Begrenzung der beim Betrieb der Maschine maximal zulässigen Leistungsaufnahme in den Steuerungsrechner der Maschine eingegeben wird. Dem Bediener kann dann die daraus resultierende maximale Produktionsgeschwindigkeit der Maschine auf dem Touchscreen angezeigt werden. Auf diese Art und Weise kann der Bediener der Maschine die von ihm für sinnvoll gehaltene maximal zulässige Leistungsaufnahme vorgeben. Auf diese Art und Weise kann der Bediener die Maschine in einen sogenannten Eco-Betrieb versetzen, bei dem die Maschine nicht mit der maximal möglichen Leistungsaufnahme und höchsten Produktionsleistung arbeitet sondern in einem Bereich darunter, welcher durch die vom Bediener vorgegebene maximal zulässige Leistungsaufnahme bestimmt wird. So kann der Bediener z. B. selbst entscheiden, ob er bereit ist, zu Lasten einer längeren Produktionszeit die Leistungsaufnahme der Maschine zu begrenzen.

In einer ersten Ausgestaltung der Erfindung ist vorgesehen, dass mittels wenigstens eines Sensors Daten des aktuellen Zustands der Maschine erfasst werden und diese Daten bei einer Berechnung der im Betrieb benötigten Leistungsaufnahme für eine vorgewählte Betriebsart im Steuerungsrechner verwendet werden. Durch den wenigstens einen Sensor ist es somit möglich, den aktuellen Zustand der Maschine zu erfassen und bei der Berechnung der benötigten Leistungsaufnahme für eine vorgewählte Betriebsart oder einen aktuellen Produktionsauftrag der Maschine zu verwenden. Die Berechnung der im Betrieb benötigten Leistungsaufnahme für eine vorgewählte Betriebsart bzw. den aktuellen Produktionsauftrag ist wichtig, um dem Bediener der Maschine signalisieren zu können, ob die von ihm gewählte maximal zulässige Leistungsaufnahme aufgrund des aktuellen Zustands der Maschine zur Einschränkung im Betrieb führt oder nicht. Erst dann kann der Bediener entscheiden, ob die von ihm gewählte maximal zulässige Leistungsaufnahme für ihn Sinn macht oder nicht. Eine maximal zulässige Leistungsaufnahme, welche den Betrieb der Maschine nicht einschränkt und insbesondere nicht die Produktionsgeschwindigkeit begrenzt, macht für den Bediener immer Sinn, da er hier keine tatsächlichen Leistungseinbußen bei der Produktion in der Maschine riskiert. Sollte allerdings aufgrund der begrenzten zulässigen Leistungsaufnahme die Produktionsgeschwindigkeit der Maschine begrenzt werden müssen, so ist es für den Bediener der Maschine wichtig, dies zu erfahren, da er dann die Entscheidung treffen kann, die Produktionsgeschwindigkeit zugunsten einer geringeren zulässigen Leistungsaufnahme zu begrenzen oder gegebenenfalls die maximal zulässige Leistungsaufnahme zu erhöhen, um eine Begrenzung der Produktionsgeschwindigkeit zu vermeiden.

Vorteilhafterweise ist außerdem vorgesehen, dass die Maschine im Betrieb eine Produktionsgeschwindigkeit aufweist und dass bei einem Überschreiten der zum Erreichen der von einem Bediener gewünschten Produktionsgeschwindigkeit benötigten Leistungsaufnahme in Bezug auf die eingegebene maximal zulässige Leistungsaufnahme die Produktionsgeschwindigkeit der Maschine so begrenzt wird, dass die vom Bediener eingegebene maximal zulässige Leistungsaufnahme nicht überschritten wird. Bei dieser Einstellung der Maschine wird sichergestellt, dass die Maschine beim Abarbeiten eines aktuellen Produktionsauftrags die vom Bediener vorgewählte, eingegebene maximal zulässige Leistungsaufnahme nicht überschreitet. In diesem Fall wird in Kauf genommen, dass gegebenenfalls die Produktionsgeschwindigkeit reduziert werden muss, damit die eingegebene maximale zulässige Leistungsaufnahme nicht überschritten wird.

In einer besonders vorteilhaften Ausgestaltung der Erfindung ist vorgesehen, dass die Maschine eine Bedruckstoffe verarbeitende Maschine ist und dass die Auftragsdaten eines Druckauftrags und/oder Maschineneinstellungen vom Steuerungsrechner erfasst und zur Berechnung der für den Druckauftrag benötigten Leistungsaufnahme verwendet werden. In diesem Fall wird nicht nur der aktuelle Zustand der Maschine berücksichtigt, sondern zusätzlich werden auch die Auftragsdaten eines Druckauftrags, welcher auf der Maschine zur Bearbeitung ansteht, und die aus dem Druckauftrag resultierenden Maschineneinstellungen mit berücksichtigt. Auf diese Art und Weise kann die für den aktuellen Druckauftrag im Betrieb benötigte Leistungsaufnahme besonders exakt berechnet werden und mit der vom Bediener vorgegebenen maximal zulässigen Leistungsaufnahme im Steuerungsrechner verglichen werden.

In einer weiteren vorteilhaften Ausgestaltung der Erfindung ist vorgesehen, dass die Bedieneinrichtung des Steuerungsrechners mehrere vorgegebene Leistungsaufnahmestufen zur Auswahl durch eine Bedienperson aufweist. In diesem Fall muss der Bediener nicht die maximal zulässige Leistungsaufnahme der Maschine in Form von Ziffern, welche der Leistungsaufnahme in KW entsprechen, eingeben, sondern er kann bestimmte Leistungsaufnahmestufen auswählen, welchen bestimmten Betriebsarten zugeordnet sind. So kommen als Leistungsaufnahmestufen die Betriebsarten "normal" mit der höchsten Leistungsaufnahme, "eco" mit einer reduzierten Leistungsaufnahme, "eco pro" mit einer minimal möglichen Leistungsaufnahme gekennzeichnet werden. Die entsprechend zugehörige elektrische Leistung in KW ist dann in der Maschine hinterlegt, wobei diese Leistung aufgrund langjähriger Erfahrungen im Betrieb von Druckmaschine und auf Grund ausgewerteter Daten analysiert und berechnet und in der Maschine hinterlegt wurde.

Es ist des Weiteren vorgesehen, dass die Bedieneinrichtung eine Anzeigeeinrichtung aufweist und dass auf der Anzeigeeinrichtung Auswirkungen der Leistungsbegrenzung auf den laufenden Betrieb der Maschine, insbesondere die Begrenzung der Produktionsgeschwindigkeit, angezeigt werden. Auf diese Art und Weise wird der Bediener der Maschine sofort informiert, welche Auswirkungen die Leistungsbegrenzung auf den laufenden Betrieb der Maschine hat. Wenn es sich bei der Maschine um eine Druckmaschine handelt, so kann z. B. die Herabsetzung der maximal möglichen Druckgeschwindigkeit angezeigt werden oder auch Auswirkungen auf die Färbung in der Druckmaschine, welche sich aus der reduzierten Leistungsaufnahme ergibt.

Vorteilhafterweise ist außerdem vorgesehen, dass der Sensor zur Erfassung des aktuellen Zustands der Maschine die Temperatur oder den Öldruck in der Maschine, insbesondere die Temperatur oder den Öldruck in Schmiereinrichtungen in der Maschine, erfasst. Die Erfassung von Öldruck und Temperatur in der Maschine ist deswegen so wichtig, da aufgrund dieser beiden Parameter vor allem die Schwergängigkeit der Maschine berechnet werden kann. Durch Veränderung von Temperatur und Öldruck verändert sich die Schwergängigkeit der Maschine. Die Schwergängigkeit der Maschine hat jedoch unmittelbar Einfluss auf die Leistungsaufnahme der Maschine, da bei einer erhöhten Schwergängigkeit der elektrische Antriebsmotor entsprechend mehr Leistung aufwenden muss, um die Maschine im gleichen Betriebszustand zu halten. Wenn sich im aktuellen Betrieb der Maschine die Schwergängigkeit aufgrund sich verändernder Temperatur oder sich veränderndem Öldrucks verändert, so kann die zur Aufrechterhaltung des aktuellen Betriebs benötigte elektrische Leistung sich erhöhen und erniedrigen. Sollte dabei die benötigte elektrische Leistung oberhalb der vom Bediener ausgewählten maximal zulässigen Leistung liegen, so wird dies dem Bediener auf der Anzeigeeinrichtung der Maschine angezeigt und er wird rechtzeitig gewarnt, dass bei einem Weiterbetrieb der Maschine mit der vorgewählten reduzierten Leistungsaufnahme mit Leistungseinschränkungen der Maschine zu rechnen ist. In diesem Fall kann der Bediener gegebenenfalls die Leistungsbegrenzung aufheben oder zumindest nach oben verschieben.

Alternativ oder zusätzlich kann auch vorgesehen sein, dass der Steuerungsrechner bei der Berechnung der benötigten Leistungsaufnahme die erfassten Daten des Sensors in einem Lastmodell, welches den Belastungszustand der Maschine nachbildet, verwendet. In diesem Fall werden die erfassten Daten des Sensors nicht unmittelbar zur Leistungsberechnung herangezogen, sondern zunächst in einem Modell, welches den Belastungszustand der Maschinen nachbildet, bewertet und dann in einem bewerteten Zustand verwendet. Dieses Lastmodell beruht meistens auf Messwerten und Erfahrungswerten, welche beim Betrieb einer Maschine gewonnen werden und kann insbesondere in Form von Kennlinien in der Maschine hinterlegt sein. Die Messwerte können dabei die Verteilung der Temperatur in der Maschine umfassen.

Die Erfassung vom Öldruck ist allerdings nur bei laufender Maschine möglich, nicht im Stillstand. Es ist aber möglich, hier Abschätzungen für den Betrieb vorzunehmen, indem Einstelldaten einer Druckmaschine für einen Druckauftrag wie Pressung und Farbwerkstemperierung im Druckwerk im Stillstand berücksichtigt und auf den Betrieb mittels des Lastmodells hochgerechnet werden.

Erfindungsgemäss ist vorgesehen, dass der Steuerungsrechner Zugriff auf die Daten mehrerer anstehender Aufträge hat und dass der Steuerungsrechner die Auswirkungen der Leistungsreduzierung über mehrere Aufträge hinweg berechnet. In diesem Fall ist es möglich, die Leistungsberechnung mehrerer hintereinander anstehender Aufträge separat vorzunehmen und dann die Auswirkungen auf den Betrieb der Maschine zu berücksichtigen. Dadurch ist es möglich, dass der Steuerungsrechner eine Optimierung der Reihenfolge der Aufträge im Hinblick auf die Gesamtzeitdauer der hintereinander durchzuführenden Aufträge bei vorgegebener Leistungsreduzierung durchführt und auf der Anzeigeeinrichtung der Bedieneinrichtung anzeigt. Auf diese Art und Weise ist es möglich, die Reihenfolge der Aufträge so zu verschieben, dass Aufträge, welche eine besonders hohe Leistung erfordern, auf einen Zeitpunkt verschoben werden, zu dem die Maschine besonders effektiv arbeitet. So ist es bekannt, dass sich bei zunehmender Betriebsdauer der Maschine diese erwärmt, was insbesondere die Schwergängigkeit aufgrund einer höheren Öltemperatur der Maschine reduziert. Aus diesem Grund kann es sinnvoll sein, Aufträge, welche eine besonders hohe Leistung erfordern, auf einen Zeitpunkt zu verschieben, an dem die Schwergängigkeit der Maschine reduziert ist. Zu Beginn der Betriebsdauer der Maschine wird dann ein Auftrag abgearbeitet, welcher eine geringe Leistung erfordert, so dass auch bei einer erhöhten Schwergängigkeit die vom Antriebsmotor aufgewendete Leistung noch unterhalb der vom Bediener ausgewählten maximal zulässigen Leistung liegt. Diese Veränderung der Reihenfolge der Aufträge muss dem Bediener jedoch z.B. auf einem Bildschirm signalisiert werden, da er ansonsten die Aufträge der Maschine nicht in der optimalen Reihenfolge zuführen kann. Mit dieser besonders vorteilhaften Ausgestaltung der Erfindung ist es somit möglich, durch eine Optimierung der Reihenfolge der Aufträge sicherzustellen, dass die vorgegebene maximal zulässige Leistung bei allen Aufträgen nicht überschritten wird und trotzdem die Gesamtzeitdauer der hintereinander durchzuführenden Aufträge minimiert wird.

Die vorliegende Erfindung wird nachfolgen anhand zweier Figuren näher beschrieben und erläutert. Es zeigen:
- Figur 1: eine schematische Übersicht der Steuerungskomponenten in einer nach dem erfindungsgemäßen Verfahren arbeitenden Druckmaschine und
- Figur 2: ein Ablaufdiagramm zur Begrenzung der maximal zulässigen Leistungsaufnahme.

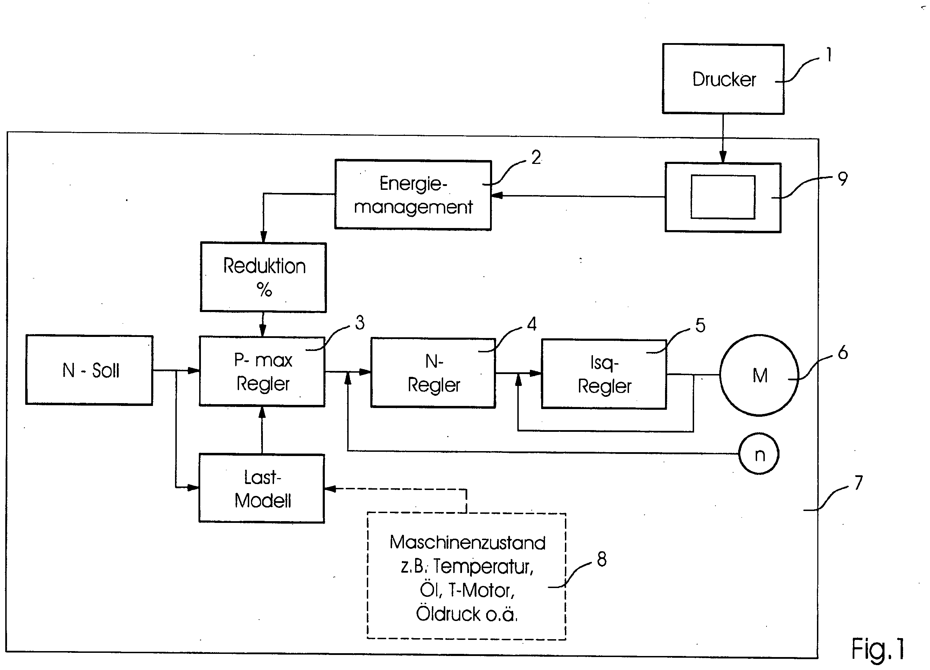

Die in Figur 1 abgebildete Druckmaschine 7 weist mindestens einen elektrischen Antriebsmotor 6 auf, welcher z. B. der Hauptantrieb der Druckmaschine 7 für die Druck-und Transportzylinder in der Druckmaschine 7 sein kann. Dieser Antriebsmotor 6 wird beim Betrieb der Druckmaschine 7 über einen Drehzahlregler 4 und einen Motorstromregler 5 angesteuert. Diesen beiden Reglern vorgeschaltet ist ein Leistungsregler 3, welcher die im Betrieb der Druckmaschine 7 maximal zulässige Leistung regelt. Der Leistungsregler 3 stellt sicher, dass die maximal zulässige Leistung durch Motorstromregler 5 und Drehzahlregler 4 nicht überschritten wird. Der Leistungsregler 3 kann Bestandteil des Steuerungsrechners 2 sein, welcher die Druckmaschine 7 steuert. Neben den üblichen Steuerungsaufgaben in einer Druckmaschine 7 übernimmt der Steuerungsrechner 2 so auch das Management der Leistungsaufnahme der Druckmaschine 7.

An den Steuerungsrechner 2 ist weiterhin eine Bedieneinrichtung 9 angeschlossen, welche z. B. in Form eines Touchscreens ausgebildet sein kann, über die eine Bedienperson 1 die für die Abarbeitung eines Druckauftrags nötigen Eingaben vornehmen kann und gleichzeitig über eine entsprechende Anzeige auf der Bedieneinrichtung 9 den Betrieb der Druckmaschine 7 überwachen kann. Auf dem Steuerungsrechner 2 befindet sich weiterhin ein durch Software modelliertes Lastmodell der Druckmaschine 7, welches aufgrund des aktuellen Zustands der Druckmaschine 7 die für die Abarbeitung des aktuell anstehenden Auftrags benötigte maximale elektrische Leistung voraus berechnet. Dabei verwendet dieses Lastmodell aktuelle Betriebsdaten der Druckmaschine 7, welche über ein oder mehrere Sensoren 8 erfasst werden können. Diese Sensoren 8 erfassen z. B. die Temperatur des Öls von Schmiereinrichtungen in der Druckmaschine 7, die Temperatur des Antriebsmotors 6 oder den Öldruck in Schmiereinrichtungen. Die so durch die Sensoren 8 erfassten Parameter werden dann in dem Lastmodell bei der Berechnung der aktuell benötigten Leistungsaufnahme verwendet.

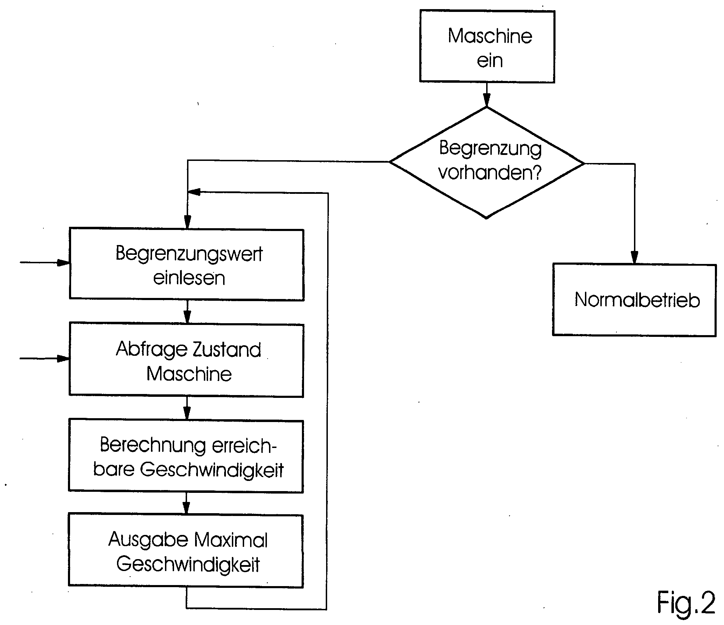

Die Figur 2 schildert den Ablauf, wenn die Bedienperson 1 die maximal zulässige elektrische Leistung begrenzt. Nachdem die Bedienperson 1 über die Bedieneinrichtung 9 die Druckmaschine 7 eingeschaltet hat, kann sie an der Bedieneinrichtung 9 verschiedene Leistungsstufen auswählen. Wenn die Bedienperson 1 den Normalbetrieb angewählt hat, arbeitet die Druckmaschine 7 mit der maximalen Leistung der Maschine. Im Betrieb der Druckmaschine 7 sind somit keinerlei Einschränkungen zu erwarten. Hat die Bedienperson 1 jedoch eine Leistungsbegrenzung durch Auswahl einer Leistungsstufe unterhalb des Normalbetriebs vorgenommen, so berechnet der Steuerungsrechner 2, ob diese Leistungsbegrenzung Auswirkungen auf den Betrieb der Druckmaschine 7 beim aktuellen Betriebszustand und dem aktuell abzuarbeitenden Druckauftrag hat. Dabei wird zunächst der ausgewählte Leistungsbegrenzungswert eingelesen. Danach wird der aktuelle Zustand der Maschine abgefragt, indem die Sensoren 8 der Druckmaschine 7 ausgewertet werden. Aufgrund dieser Messergebnisse wird dann im Steuerungsrechner 2 über das Lastmodell die erreichbare Druckgeschwindigkeit der Druckmaschine 7 berechnet und dem Bediener auf einer Anzeigeeinrichtung der Bedieneinrichtung 9 mitgeteilt.

Dabei können im Stillstand nicht alle Werte erfasst werden, so ist der Öldruck nur bei laufender Druckmaschine 7 erfassbar. Es ist aber möglich Kennlinien zu hinterlegen, welche den Öldruck in Abhängigkeit von Betriebsbedingungen wie der Temperatur der Druckmaschine 7 im Voraus abschätzen lassen. Dabei ist meist auch der Temperaturverlauf bei kalter Druckmaschine 7 bis zur Betriebstemperatur durch Messungen und Erfahrungswerte bekannt und im Lastmodell hinterlegt. Liegt die dabei errechnete erreichbare Geschwindigkeit unter der maximalen Druckgeschwindigkeit der Druckmaschine 7, so wird diese Geschwindigkeit der Bedienperson 1 auf der Bedieneinrichtung 9 mitgeteilt. In diesem Fall hat die Bedienperson 1 dann die Möglichkeit, die Leistungsbegrenzung zu erhöhen und somit die Verringerung der Druckgeschwindigkeit zu vermeiden oder die Druckmaschine 7 mit der verringerten maximalen Druckgeschwindigkeit zu betreiben. Wenn die Berechnung ergibt, dass die maximal erreichbare Produktionsgeschwindigkeit nicht unterhalb der vom Bediener gewünschten Druckgeschwindigkeit der Druckmaschine 7 liegt, so hat die Bedienperson 1 keine Leistungseinbußen zu erwarten und die von ihr vorgegebene Leistungsreduzierung kann ohne weitere Informationen zum Betrieb der Druckmaschine 7 verwendet werden.

Das im Steuerungsrechner 2 hinterlegte Lastmodell kann auch lernfähig sein, so dass die Vorausberechnungen insbesondere im Stillstand mit der Zeit optimiert werden. Insbesondere können so Kennlinien für Temperatur, Öldruck und Drehmoment optimiert werden und so die Vorausberechnung im Stillstand und insbesondere bei kalter Druckmaschine 7 verbessert werden. Wurden z.B. Kennlinien für den zeitlichen Verlauf der Maschinentemperatur vorab ermittelt, kann ein Temperatur-Modell aufgestellt werden, welches Teil des Lastmodells ist. Mit dem Temperatur-Modell kann der zeitliche Verlauf der erreichbaren Druckgeschwindigkeit vorausberechnet werden, wenn die Druckdaten und die gewünschte Produktionsgeschwindigkeit bekannt sind. Bei der Berechnung des benötigten Drehmoments, welches proportional zur Leistung ist, kann im Steuerungsrechner 2 eine Aufteilung der Drehmoment-Verbraucher in einen Anteil, dessen Temperatur annähernd als konstant angesehen werden kann, was insbesondere bei Farbwerkstemperierung im Druckwerk sehr gut zutrifft, und in einen stark temperaturvarianten Anteil z.B. Antriebsstrang mit Zahnrädern und Lagern, vorgenommen werden.

### Bezugszeichenliste

- 1: Bedienperson
- 2: Steuerungsrechner
- 3: Leistungsregler
- 4: Drehzahlregler
- 5: Motorstromregler
- 6: Antriebsmotor
- 7: Druckmaschine
- 8: Sensor
- 9: Bedieneinrichtung

## Patentansprüche

1. Verfahren zur Steuerung von elektrischen Antrieben (6) in Maschinen (7) mit einem Steuerungsrechner (2) und einer Bedieneinrichtung (9),
wobei mittels der Bedieneinrichtung (9) eine Vorgabe zur Begrenzung der beim Betrieb der Maschine (7) maximal zulässigen Leistungsaufnahme in den Steuerungsrechner (2) eingegeben wird und wobei mittels wenigstens eines Sensors (8) Daten des aktuellen Zustands der Maschine (7) erfasst werden und diese Daten bei einer Berechnung der im Betrieb benötigten Leistungsaufnahme für eine vorgewählte Betriebsart im Steuerungsrechner (2) verwendet werden,
wobei der Steuerungsrechner (2) Zugriff auf die Daten mehrerer anstehender Aufträge hat und wobei der Steuerungsrechner (2) die Auswirkungen der Leistungsreduzierung über mehrere Aufträge hinweg berechnet.

2. Verfahren nach Anspruch 1,
**dadurch gekennzeichnet,**
**dass** die Maschine (7) im Betrieb eine Produktionsgeschwindigkeit aufweist und dass bei einem Überschreiten der zum Erreichen der vom Bediener gewünschten Produktionsgeschwindigkeit benötigten Leistungsaufnahme in Bezug auf die eingegebene maximale zulässige Leistungsaufnahme die Produktionsgeschwindigkeit der Maschine (7) so begrenzt wird, dass die vom Bediener eingegebene maximale zulässige Leistungsaufnahme nicht überschritten wird.

3. Verfahren nach einem der vorgehenden Ansprüche,
**dadurch gekennzeichnet,**
**dass** der Steuerungsrechner (2) die im Betrieb benötigte Leistungsaufnahme im Stillstand vorausberechnet.

4. Verfahren nach einem der vorgehenden Ansprüche,
**dadurch gekennzeichnet,**
**dass** die Maschine (7) eine Bedruckstoffe verarbeitende Maschine ist und dass die Auftragsdaten eines Druckauftrags und/oder Maschineneinstellungen vom Steuerungsrechner (2) erfasst werden und zur Berechnung der für den Druckauftrag benötigten Leistungsaufnahme verwendet werden.

5. Verfahren nach einem der vorgehenden Ansprüche
**dadurch gekennzeichnet,**
**dass** die Bedieneinrichtung (9) des Steuerungsrechners (2) mehrere vorgegebene Leistungsaufnahmestufen zur Auswahl durch eine Bedienperson (1) aufweist.

6. Verfahren nach einem der vorgehenden Ansprüche,
**dadurch gekennzeichnet,**
**dass** die Bedieneinrichtung (9) eine Anzeigeeinrichtung aufweist und dass auf der Anzeigeeinrichtung Auswirkungen der Leistungsbegrenzung auf den laufenden Betrieb der Maschine (7), insbesondere die Begrenzung der Produktionsgeschwindigkeit, angezeigt werden.

7. Verfahren nach einem der Ansprüche 1 bis 6,
**dadurch gekennzeichnet,**
**dass** der Sensor (8) zur Erfassung des aktuellen Zustands der Maschine (7) die Temperatur oder den Öldruck in der Maschine (7), insbesondere die Temperatur oder den Öldruck in Schmierreinrichtungen in der Maschine (7), erfasst.

8. Verfahren nach einem der Ansprüche 1 bis 7,
**dadurch gekennzeichnet,**
**dass** der Steuerungsrechner (2) bei der Berechnung der benötigten Leistungsaufnahme die erfassten Daten des Sensors (8) in einem Lastmodell, welches den Belastungszustand der Maschine (7) nachbildet, verwendet.

9. Verfahren nach Anspruch 1 bis 8,
**dadurch gekennzeichnet,**
**dass** der Steuerungsrechner (2) eine Optimierung der Reihenfolge der Aufträge im Hinblick auf die Gesamtzeitdauer der hintereinander durchzuführenden Aufträge bei vorgegebener Leistungsreduzierung durchführt und auf der Anzeigeeinrichtung der Bedieneinrichtung (9) anzeigt.

10. Verfahren nach Anspruch 8,
**dadurch gekennzeichnet,**
**dass** das im Steuerungsrechner (2) hinterlegte Lastmodell lernfähig ist.

## Claims

1. Method for controlling electric drives (6) in machines (7) including a control unit (2) and an operator control device (9),
wherein a predefined limitation of a maximum acceptable power input during operation of the machine (7) is entered into the control unit (2) by means of the operator control device (9), wherein data on the current state of the machine (7) are recorded by means of at least one sensor (8) and are used by the control unit (2) to calculate the power input required during operation for a preselected mode of operation, and wherein the control unit (2) has access to the data of a number of pending jobs and calculates the effects of the power reduction over a number of jobs.

2. Method according to claim 1,
**characterized**
**in that** during operation, the machine (7) has a production speed and in that when the power input required to reach the production speed desired by the operator exceeds the maximum acceptable power input that has been entered, the production speed of the machine (7) is limited in such a way that the maximum acceptable power input entered by the operator is not exceeded.

3. Method according to any one of the preceding claims,
**characterized**
**in that** the control unit (2) calculates the power input required during operation in advance during a standstill.

4. Method according to any one of the preceding claims,
**characterized**
**in that** the machine (7) is a machine for processing printing material and in that the control unit (2) establishes the job data of a print job and/or machine settings and uses them to calculate the power input required for the print job.

5. Method according to any one of the preceding claims,
**characterized**
**in that** the operator control device (9) of the control unit (2) has a number of predefined power input levels to be selected by an operator (1).

6. Method according to any one of the preceding claims,
**characterized**
**in that** the operator control device (9) has a display device and in that effects of the power limitation on the ongoing operation of the machine (7), in particular of the production speed limitation, are displayed on the display device.

7. Method according to any one of claims 1 to 6,
**characterized**
**in that** the sensor (8) for recording the current state of the machine (7) records the temperature or oil pressure in the machine (7), in particular the temperature or oil pressure in lubrication devices in the machine (7).

8. Method according to any one of claims 1 to 7,
**characterized**
**in that** to calculate the required power input, the control unit (2) uses the recorded data of the sensor (8) in a load model that simulates the load state of the machine (7).

9. Method according claim 1 to 8,
**characterized**
**in that** the control unit (2) carries out an optimization of the order of the jobs in view of the total duration of the jobs to be carried out successively with the predefined power reduction and displays it on the display device of the operator control device (9).

10. Method according to claim 8,
**characterized**
**in that** the load model saved in the control unit (2) is adaptive.

## Revendications

1. Procédé pour la commande d'entraînements électriques (6) dans des machines (7) avec un ordinateur de commande (2) et un dispositif de manipulation (9),
**caractérisé en ce**
**qu'**un paramètre pour la limitation de la puissance absorbée maximale autorisé pendant le fonctionnement de la machine (7) est saisi au moyen du dispositif de manipulation (9) dans l'ordinateur de commande (2) et des données de l'état actuel de la machine (7) sont saisies au moyen d'un capteur (8) et ces données sont utilisées dans l'ordinateur de commande (2) pour le calcul de la puissance absorbée nécessaire dans un mode de service présélectionné, l'ordinateur de commande (2) ayant accès aux données de plusieurs tâches en attente et l'ordinateur de commande (2) calculant les répercussions de la réduction de puissance sur plusieurs tâches.

2. Procédé selon la revendication 1,
**caractérisé en ce**
**que** la machine (7) présente en fonctionnement une vitesse de production et qu'en cas de dépassement de la puissance absorbée nécessaire à la vitesse de production souhaitée par l'utilisateur par rapport à la puissance absorbée admissible maximale saisie, la vitesse de production de la machine (7) est limitée de sorte que la puissance absorbée admissible maximale saisie par l'utilisateur n'est pas dépassée.

3. Procédé selon l'une des revendications précédentes,
**caractérisé en ce**
**que** l'ordinateur de commande (2) calcule en avance la puissance absorbée nécessaire au fonctionnement pendant le temps d'immobilisation.

4. Procédé selon l'une des revendications précédentes,
**caractérisé en ce**
**que** la machine (7) est une machine de traitement de substrats imprimés et que les données d'une tâche d'impression et/ou les paramètres de la machine sont saisis par l'ordinateur de commande (2) et utilisés pour le calcul de la puissance absorbée nécessaire à la tâche d'impression.

5. Procédé selon l'une des revendications précédentes, **caractérisé en ce**
**que** le dispositif de manipulation (9) de l'ordinateur de commande (2) présente plusieurs niveaux de puissance absorbée prédéterminés pouvant être sélectionnés par un opérateur (1).

6. Procédé selon l'une des revendications précédentes,
**caractérisé en ce**
**que** le dispositif de manipulation (9) présente un dispositif d'affichage et que les effets de la limitation de puissance sur la machine (7) en cours de fonctionnement, en particulier la limitation de la vitesse de production, sont affichés sur le dispositif d'affichage.

7. Procédé selon l'une des revendications 1 à 6,
**caractérisé en ce**
**que** le capteur (8) détecte la température ou la pression d'huile dans la machine (7), en particulier la température ou la pression d'huile dans des dispositifs de graissage de la machine (7) pour déterminer l'état actuel de la machine (7).

8. Procédé selon l'une des revendications 1 à 7,
**caractérisé en ce**
**que** l'ordinateur de commande (2) utilise, pour le calcul de la puissance absorbée nécessaire, les données saisies par le capteur (8) dans un modèle de charge, qui reproduit l'état de sollicitation de la machine (7).

9. Procédé selon l'une des revendications 1 à 8,
**caractérisé en ce**
**que** l'ordinateur de commande (2) exécute une optimisation de l'ordre des tâches par rapport à toute la durée des tâches à effectuer successivement avec une réduction de puissance prescrite et l'affiche sur le dispositif d'affichage du dispositif de manipulation (9).

10. Procédé selon la revendication 8,
**caractérisé en ce**
**que** le modèle de charge déposé dans l'ordinateur de commande (2) est adaptable.
